# EUROPEAN PATENT APPLICATION

(11) **EP 0 645 491 A1**
(43) Date of publication of application: **29.03.1995**
(21) Application number: 94115109.4
(22) Date of filing: 26.09.1994
(51) Int. Cl.: D21H 17/02, D21H 11/12, A23K 1/14

(54) **Process for manufacturing paper from integral vegetable substances and paper thus obtained**

(30) Priority: 28.09.1993 IT VA930021
(71) Applicant: FANINI S.r.L., I-36028 Rossano Veneto VI (IT)
(72) Inventor: Nicolucci, Clemente, Padova (IT); Monegato, Achille, I-31037 Loria TV (IT); De Poli, Fabrizio, I-00185 Roma (IT)

(57) **Abstract**

A process for manufacturing paper from integral vegetable substances with low alpha-cellulose content, in particular biomasses of various origins and residual wastes coming from farm processes and the farm-foods industry, comprising the steps of drying and reducing said substances to minute particles, before adding them to the cellulose-fibre mix, which is used for making paper in paper-machines.. Also the present invention relates to paper obtained from the above-described process.

## Description

### Background of the Invention.

The present invention refers to a process for manufacturing paper using integral vegetable substances with a high content of alpha-cellulose. The following description refers especially to paper, though the process described is equally useful for the manufacture of cardboard which is therefore included as part of this invention.

In the present text, the expression "integral vegetable substance" is understood to mean a substance of vegetable origin having an alpha-cellulose content of normally less than 15% in weight with respect to its weight in the natural state and a water content of less than 20% in weight. As, in paper-making technology, those substances different to cellulose are commonly called filler, another possible name for the integral vegetable substances in the invention is organic filler.

In the long history of paper-making, the use of vegetable fillers other than cellulose has been studied at various times, but the vegetable substances effectively used were always chosen from the fibre types, especially from those with a high cellulose content. The main non-cellulose and non-fibre vegetable substances used on a large scale in paper making were starches, especially for operations of treating the surface of already-manufactured paper (size-press and coating).

Recently, the Applicant described in the European Patent Application N.93104829 a paper-manufacturing process which foresees the use of integral seaweed.

### Summary of the Invention

Continuing research on the potential use of natural and vegetable substances, particularly the low-cost waste materials deriving from other manufacturing processes, for paper manufacturing, the Applicant has now found it possible to utilise advantageously integral vegetable substances in paper making, and especially the low-cost waste materials from other manufacturing process, in part or total substitution of mineral fillers normally used in paper and also in substitution of part of the cellulose itself.

According to the invention, the paper has a main characteristic of containing from 1% to 50% in weight (on dry basis) of integral-form vegetable substances, preferably from 10% to 40% in weight (on dry basis).

Particularly useful in paper-making were those vegetable substances consisting of farm-waste or residuals, such as integral straw, integral corn, corn-cobs, bran from wheat or other cereals, husks of rice and other cereals, vegetable skins, peels and residuals of citrus fruits, the residuals from sugar-cane processing, the residuals of seeds after extraction of oil (cotton, grapes, soya), residuals after the extraction of corn starch and from tapioca (kassava), the residuals of grapes after the extraction of wine, residuals of distillates, vegetable residuals coming from farm-foods processing.

According to a fundamental characteristic of this invention, the natural vegetable substances used in making the paper are used in their integral form, that is, without subjecting them to special chemical treatments to remove the non-fibrous part, except for a considerable reduction in their water content, which is always reduced to values of less than 20% in weight, for their long preservation.

According to other embodiments of the present invention, for energy-saving and especially for short-term and nearby uses, even to the extent of transport costs, the grinding of this material is done in the wet state and its preservation in the form of slurries having a dry content of between 1% and 70% in weight. To prevent fermentation of these slurries, pasteurizing methods used in the food sector (e.g. in the fruit-juice field) and in the dairy sector (long-life milk) may be used by heating to temperatures up to 125°C for periods of from 30 to 60 seconds or by irradiation with penetrating rays.

In the typical embodiments of the invention, the vegetable substances used for making paper are dried at a temperature not higher than 150°C and then reduced to powder (flour) by micronizing mills and by technologies commonly used in the production of food flour. With these treatments of drying and reduction to flour, the elementary wall of individual cells is preserved. As the walls wrapping the elementary cells making up the integral vegetable substances used are not degraded, this means that the flour obtained swells by osmotic and capillary absorption of water if dispersed in water without yielding significant amounts of salts and colloids to the water. The most common materials that undergo solubilization in water are the inorganic salts, pectic substances, polysaccharides, glucides, hemicelluloses.

According to the invention, this characteristic of the integral vegetable substances is very important because an increase in water solubility of some component would deteriorate the characteristics of the paper-machine waste waters, with subsequent increase in purification treatment costs for the recycle waters, and a reduction in the yield of materials not retained by the paper.

In the preferred embodiments of the invention, the flours of integral vegetable substances are mixed with typical quantities of 1% to 30% colloids or agglomerates or their mixtures to reduce the water solubility of their components.

Particularly suited to the purpose are starches, partly cationized starches, aluminium salts, especially sulphate and polychloride, iron sulphate, cationizing substances etc. In the case of integral vegetable substances that already contain starch or other colloids, such as corn residuals, the dried flour can undergo a light cationizing treatment of the starch present in it, without having to add it.

The following test is used to verify the solubilization of vegetable substances and inorganic matter requires the chemical oxygen demand (COD) determination for organic matter and the conductivity for inorganic matter:
10g of material ground to the dimensions and in the manner required is suspended in 1000 ml of deionized water at 25°C, and gently stirred (60 r.p.m.) with a magnetic stirrer. The COD, pH and conductivity are determined after 1 hour, 4 hours, 24 hours.

**Table 1**

| determination of the index of solubilization of organic matter (COD), inorganic matter (conductivity) and pH of several materials used in making the paper. | | | | |
|---|---|---|---|---|
| **ground bran** (ash at 525°C=25%) | | | | |
| conc. % | time hour | pH | conductivity microS | COD ppm |
| 1 | 1 | 5.8 | 240 | 700 |
| 1 | 4 | 5.6 | 250 | 900 |
| 1 | 24 | 4.8 | 210 | 1000 |

| grape residuals **(ash at 525°C=22%)** | | | | |
|---|---|---|---|---|
| conc. % | time hour | pH | conductivity microS | COD ppm |
| 1 | 1 | 6.6 | 350 | 900 |
| 1 | 4 | 6.9 | 370 | 1200 |
| 1 | 24 | 7.0 | 400 | 1400 |

Other parameters such as the TOC and ionic chromatography, are equally valid for these determinations.

A limiting of the solubilisation of organic matter and mineral salts was noted during the permanence of the material in water suspension. Retention and clarification treatments of the waters used in the papermaking system further reduce phenomena of solubilisation.

The swelling capacity of flours of non-cellulose vegetable substances is an essential feature for their use in paper-making. In addition to paper-making, the flours obtained are also useful for preparing animal feeds and, sometimes, for human foodstuffs. In the case of animal feeds, the reduction in vegetable substance flours represents good progress with respect to that of farm residuals, because it enables the convenient formulation of these flours with any other component required in the formulation of animal feeds.

The substitution of inorganic fillers with farm-origin and agro-industrial vegetable fillers compatible with animal feed also implies a possible alternative use for the paper thus obtained which, after being used, can be conveniently eliminated as animal feed. As an animal feed, the recommended paper content for formulating livestock feed flours is between 30% and 80%.

The use of inorganic materials as fillers and as coatings in the paper-making industry is very widespread and uses mainly kaolin and calcium carbonate. These minerals are extracted from quarries and mines, which causes considerable environmental problems, and these are non-renewable raw materials. Considering that the integral vegetable substances according to the invention are renewable products and available as market surplus, it is easy to appreciate the importance of their use in substitution of mineral fillers, both from the economical standpoint and from that of ecology.

According to a fundamental characteristic of the invention, the process of converting integral vegetable substances into flour comprises the following steps:
a) the vegetable substances are dried at a temperature not higher than 150°C to reduce the water content to a value of less than 20% in weight;
b) the dried substances are micronized by means of food-flour micronizing systems and sifted in order to obtain particle sizes of between 0.1 and 500 µm, and preferably between 1 and 100 µm;
c) these micronized substances are added to the paper cellulose mix in quantities of from 1 to 50% in weight with respect to the mix.

In the preferred embodiments of the invention, the micronized particles coming from stage b) of the above mentioned process can be used alone or mixed with other substances or with other additives intended for use in making the paper; as for example starch, kaolin, calcium carbonate, talc, barium sulphate, bentonites, diatoms, zeolites, silicates, retentives, cellulose, dyes and other materials usually used in paper-making.

The inorganic mineral fillers are normally added to the paper mix in the form of very small particle sizes ranging between 0.1 and 50 µm and have a specific weight of between 2.5 and 3.0 kg/dm³.

The integral vegetable flours used in the paper according to the present invention normally have a specific weight of from 1.2 to 1.7 kg/dm³. The apparent specific weight, expressed in kg/dm³, is normally between 0.2 and 0.8 and depends on the type of grinding and on the average sizes obtained.

It appears immediately clear that substituting part or all of the inorganic fillers of the paper with products according to this invention, gives a considerable reduction in specific weight of the paper obtained. In addition to producing lighter paper at equal thickness, the use of these organic additives gives the paper special properties whereby it is possible to reduce the quantity of constituent cellulose fibre, though maintaining suitable mechanical and physical properties of the paper and its use, especially for printing and writing.

The integral use of vegetable substances according to the invention, especially when those substances are farm and agroindustrial residuals with elimination problems, has a further advantage of not giving rise to pollutant by-products and the creation of further problems in their elimination.

The integral use of non-fibrous vegetable substances in making paper according to the present invention therefore represents an advantageous system for solving the problem of eliminating farm products and farm-processing residuals, agroindustrial residuals and biomasses of various origins. For the realization of the paper according to the invention it is essential that the integral vegetable substances used are dried and pulverized by the methods given in order to prevent variations in the solubility of some components and to obtain particles of similar dimensions to those of the mineral fillers used in making the paper.

As mentioned above, the quantity of integral organic matter that can be added to the paper can vary within very wide limits, up to a 50% percentage in weight of the paper, and is used both in substitution of the mineral fillers and of the cellulose. In the realization forms preferred by this invention from 30% to 100% in weight of the inorganic mineral fillers and from 5% to 40% in weight of the cellulose normally used to obtain a determinate type of paper is substituted without altering the physical-mechanical properties and its utilization. Considering that the organic filler according to the invention has a volume yield of about twice that of an inorganic filler, the possibility of obtaining paper with a lower weight per square metre, at equal sheet thickness, and having the same functional characteristics, is immediately evident. In practice, by using the invention's paper, it is possible to produce books and exercise books with the same number of pages as those actually in use but with a considerably lower weight.

The use of integral vegetable substances as paper constituents has the extra advantage of obtaining a more biodegradable paper than those actually in use. The integral vegetable substances according to the invention are normally delivered to the paper-machine, the same as with normal mineral fillers. However, they are also suitable for being used with surface treatments of the already formed paper; as for example in coating machines or in size-press. The use of integral vegetable substances for making the paper, also offers a special scenting of the same, if aromatic and scented plants, or their residuals after extraction of the essences, are used.

### DETAILED DESCRIPTION OF THE INVENTION

To better illustrate the characteristics of the paper and the process according to the invention, several realization forms of the same and of the products thus obtained are given herewith. The natural and integral vegetable substances, better still if decoloured and dried in the field by the sun and oxygen in the air, as can be done with corn and annual plants, can be partially decoloured (bleach) with oxygen and its derivatives thus preserving the merit of being TCF (Totally Chlorine Free).

A more complete understanding of the present invention will be provided in relation to the following examples which are understood to be non-limiting to the basic inventive concepts of the present invention.

### Example 1

Use of ground corn bran for making paper and paperboard.
100 kg of corn bran was ground in a micronizing mill and reduced to average dimensions of 25 µms (ranging between 1 and 200 µm), with an apparent specific weight of 0.56 kg/dm³ and an ash-content (determined at 525°C) of 25%. A mix consisting of 570 kg white recycled paper coming from paper processing plant and 100 kg of ground corn-bran is added to a 700 kg/h (approx.) capacity paper-machine, according to the above methods. To the mix is added diketonic-type synthetic sizing agent to make the paper suitable for writing with water-based inks, and cationic starch to increase the paper's retentive capacity. The web delivery speed was adjusted to 60 m/min. The paper-machine was automatically controlled by an Accuray 1180 Micro Plus system for substance, moisture, thickness, opacity and whiteness. The paper obtained (550 kg net of waste and delivery) had a grammage of approx. 90 g/m², with an ivory appearance, and typical speckling (this can be easily eliminated by suitable sifting and grinding), was perfectly writable, photocopiable and printable. Table 2 gives the main characteristics of the paper obtained as compared to paper produced under the same operative conditions, with the same additives (sizing agents and starch) but without the ground bran.

### EXAMPLE 2

Use of squeezed-grape residuals for making paper and card.
The residual used in the industrial test is dark in colour, due to the drying methods and type of treatment used in squeezing. This aspect can, however, be different if suitable interventions and production technologies are used: in fact, it is possible to obtain a sufficiently clean and clearer residual more suited to the paper-making industry.
100 kg of this material, very dark in appearance with dryness of 90%, is ground twice in a hammer mill with 500-µm sieves. This gives 92 kg of dark powder which is destined for paper making: during this stage, the product undergoes a further loss of water. This flour has an apparent specific weight of 0.69 kg/dm³ and an ash-content (determined at 525°C) of 22%.
A mix consisting of 570 kg of white recycled paper and 92 kg of ground squeezed-grape residuals is added to a 700 kg/h (approx.) paper-machine according to the above methods. To the mix is added diketonic-type synthetic sizing agent to make the paper suitable for writing with water-based inks, and cationic starch to increase the paper's retentive capacity. The web delivery speed was adjusted to 60 m/min.
The paper-machine was automatically controlled by an Accuray 1180 Micro Plus system for substance, moisture, thickness, opacity and whiteness. The paper obtained (500 kg net of waste and delivery) had a substance of about 90 g/m², with a typical ivory appearance, typical speckling (this can be easily eliminated by suitable grinding), was perfectly writable, photocopiable and printable. Table 2 gives the main characteristics of the paper obtained under the same operative conditions, with the same additives (sizing agents and starch) but without the squeezed-grape residuals.

**TABLE 2**

| characteristics of the paper obtained using corn bran (example 1), grape residuals (example 2). | | | | |
|---|---|---|---|---|
| residuals | | reference | bran | grape |
| grammage | g/m² | 90 | 90 | 90 |
| thickness | µm | 99 | 109 | 108 |
| whiteness (photovolt) | % | 93 | 76 | 63 |
| opacity | % | 83 | 86 | 92 |
| ash (525°C) | % | 20 | 17 | 18 |
| ink flotation (Pelikan 4001) | min | >10 | >10 | >10 |
| Cobb (60 sec) | g/m² | 24 | 25 | 24 |
| smoothness (Gurley 100ml) | sec | 200 | 170 | 180 |
| air permeability (Gurley 100ml) | sec | 79 | 42 | 90 |
| Dennison waxes | N | 18 | 18 | 20 |
| burst | kg/cm² | 2.6 | 2.0 | 2.0 |
| breaking length | Km | 6.6-3.4 | 5.8-3.3 | 5.5-2.7 |
| tensile strength | % | 2.2-5.5 | 2.1-5.7 | 2.3-4.2 |
| tensile energy | J/m² | 95-120 | 65-120 | 70-80 |
| dust index (400 sheets) | | 1.0 | 2.0 | 1.1 |
| moisture content | % | 5.2 | 5.8 | 5.7 |
| relative humidity | % | 42 | 38 | 37 |
| tear Elmendorf | kN | 40-44 | 36-40 | 36-38 |
| stiffness Taber | mN | 2.1-1.2 | 2.4-1.4 | 2.2-1.4 |
| folding endurance | N | 20-25 | 25-30 | 20-30 |

### EXAMPLE 3

White corn flour for making "polenta", available at a mill. This raw material was ground in a micronizing mill to dimensions of less than 200 µm. The apparent specific weight was equal to 0.69 kg/dm³ with the ash-content at 22%.
A mix of 570 kg of bleached chemical pulp (70% short fibre and 30% long fibre) and 60 kg of ground white corn-flour for polenta was added to a 700 kg/h (approx.) paper-machine. To the mix is added diketonic-type synthetic sizing agent to make to paper suitable for writing with water-based inks, and cationic starch to increase the paper's retentive capacity. The web delivery speed was adjusted to 60m/min.
The paper-machine was automatically controlled by an Accuray 1180 Micro Plus system for substance, moisture, thickness, opacity and whiteness. The paper obtained (500 kg net of waste and delivery) had a grammage of about 90 g/m², with a light ivory appearance, was perfectly writable, photocopiable and printable.

The paper obtained had good mechanical properties (burst = 2.5 kg/cm², breaking length = 6.2-3.5 Km) and an attractive appearance (whiteness = 84% photovolt).

### EXAMPLE 4

100 g of peppermint leaves are naturally dried (in the sun), ground to dimensions of less than 500 µm and used for hand-making sheets of paper (according to standards ATICELCA MC 218-79) of various ground peppermint-leaf concentrations. The ground peppermint leaves have an ash-content (525°C) of 5% and an apparent specific weight (which depends on the type and degree of grinding) equal to 0.49 kg/dm³.

The characteristics of the paper specimens obtained, grammage approx. 170 g/m², bleached chemical cellulose composition (70% short fibre, 30% long fibre) and 4% CaCO₃, were compared with the reference samples made under the same conditions and with the same raw materials. The specimens, which have a typical green speckling, showed the following characteristics:

| | | | | | | |
|---|---|---|---|---|---|---|
| concentration | % | 0 | 5 | 10 | 20 | 40 |
| grammage | g/m² | 174 | 171 | 171 | 171 | 164 |
| thickness | µm | 256 | 253 | 255 | 265 | 259 |
| bulk | dm³/kg | 1.47 | 1.48 | 1.49 | 1.55 | 1.58 |
| breaking length | Km | 3.7 | 3.3 | 2.9 | 2.5 | 1.8 |
| tensile strength | % | 1.7 | 1.5 | 1.5 | 1.4 | 1.6 |
| burst | kg/cm² | 3.1 | 2.4 | 2.3 | 1.9 | 1.5 |
| tear Elmendorf | kN | 156 | 128 | 120 | 92 | 76 |
| ash (525°C) | % | 4.0 | 4. | 4.3 | 4.6 | 5.0 |

### EXAMPLE 5

100 g (dry) of coffee grounds (residuals of already used coffee) are used without further grinding to hand-make sheets of paper (according to standards ATICELCA MC 218-79) of various concentrations. The coffee grounds used, after being sifted through a 300 µm sieve, showed an ash-content (at 525°C) of 10% and an apparent specific weight equal to 0.59 kg/dm³.

The characteristics of the paper specimens obtained, substance approx. 170 g/m², bleached chemical cellulose composition (70% short fibre, 30% long fibre) and 4% CaCO₃, were compared with reference samples made under the same conditions and with the same raw materials. The specimens, more or less dark brown according to the concentration of coffee grounds, showed the following characteristics:

| | | | | | | |
|---|---|---|---|---|---|---|
| concentration | % | 0 | 5 | 10 | 20 | 40 |
| grammage | g/m² | 174 | 172 | 173 | 171 | 168 |
| thickness | µm | 256 | 253 | 256 | 262 | 261 |
| bulk | dm³/kg | 1.47 | 1.47 | 1.48 | 1.53 | 1.55 |
| breaking length | Km | 3.7 | 3.1 | 2.7 | 2.5 | 1.7 |
| tensile strength | % | 1.7 | 1.5 | 1.4 | 1.4 | 1.5 |
| burst | kg/cm² | 3.1 | 2.4 | 2.2 | 1.8 | 1.4 |
| tear Elmendorf | kN | 156 | 124 | 116 | 88 | 72 |
| ash (525°C) | % | 4.0 | 4.2 | 4.4 | 4.7 | 5.4 |

### EXAMPLE 6

130 grams of lemon peel (vacuum dried at 70°C) are suspended in 500 ml of ethyl alcohol and reflow heated for 30 min. This gives about 100 g of white powder, which maintains only a trace of the original perfume, and was sifted through a 300 µm sieve. This material (the equivalent of that coming from the extraction of essence) has an ash-content (525°C) of 15% and an apparent specific weight equal to 0.45 kg/dm³ is used to hand-make sheets of paper (according to standards ATICELCA MC 218-79) of various concentrations.

The characteristics of the paper specimens obtained, substance approx. 170 g/m², bleached chemical cellulose composition (70% short fibre, 30% long fibre) and 4% of CaCO₃, were compared with the reference samples made under the same conditions and with the same raw materials. The specimens had a pleasant light-ivory colour and showed the following characteristics:

| | | | | | | |
|---|---|---|---|---|---|---|
| concentration | % | 0 | 5 | 10 | 20 | 40 |
| grammage | g/m² | 174 | 171 | 170 | 172 | 161 |
| thickness | µm | 256 | 250 | 250 | 258 | 251 |
| bulk | dm³/kg | 1.47 | 1.46 | 1.47 | 1.50 | 1.56 |
| whiteness (photovolt) | % | 88 | 87 | 85 | 82 | 80 |
| breaking length | Km | 3.7 | 3.5 | 3.2 | 2.9 | 2.3 |
| tensile strength | % | 1.7 | 1.5 | 1.5 | 1.5 | 1.6 |
| burst | kg/cm² | 3.1 | 2.9 | 2.8 | 2.4 | 2.0 |
| tear Elmendorf | kN | 156 | 124 | 116 | 90 | 80 |
| ash (525°C) | % | 4.0 | 4.4 | 4.8 | 5.4 | 6.4 |

### EXAMPLE 7

150 g of kenaf naturally dried in the field are ground to dimensions of less than 500 µm and used to hand-make sheets of paper (according to standards ATICELCA MC 218-79) of various concentrations of ground kenaf. The kenaf taken into consideration has an ash-content (at 525°C) of 15% and an apparent specific weight (depending on the type and degree of grinding) equal to 0.57 kg/dm³.

The characteristics of the paper specimens obtained, approx. 170 g/m², bleached chemical cellulose composition (70% short fibre, 30% long fibre) and 4% CaCO₃, were compared with the reference samples made under the same conditions and with the same raw materials. The specimens showed the following characteristics:

| | | | | | | |
|---|---|---|---|---|---|---|
| concentration | % | 0 | 5 | 10 | 20 | 40 |
| grammage | g/m² | 174 | 171 | 172 | | 165 |
| thickness | µm | 256 | 277 | 285 | 310 | 315 |
| bulk | dm³/kg | 1.47 | 1.62 | 1.66 | 1.80 | 1.91 |
| breaking length | Km | 3.7 | 3.3 | 2.9 | 2.5 | 1.8 |
| tensile strength | % | 1.7 | 1.5 | 1.6 | 1.4 | 1.6 |
| burst | kg/cm² | 3.1 | 2.5 | 2.3 | 2.1 | 1.4 |
| tear Elmendorf | kN | 156 | 116 | 112 | 92 | 72 |
| whiteness (photovolt) | % | 87 | 73 | 64 | 55 | 47 |
| ash (525°C) | % | 4.0 | 4.2 | 4.4 | 4.8 | 5.3 |

### EXAMPLE 8

Lavender plants dried in the sun, are ground to dimensions of less than 500 µm and used to hand-make sheets of paper (according to standards ATICELCA MC 218-79). The flour obtained has an ash-content (525°C) of 17% and an apparent specific weight (depending on the type and degree of grinding) equal to 0.56 kg/dm³.

The characteristics of the paper specimens obtained, approx. 170 g/m², bleached chemical pulp composition (70% short fibre, 30% long fibre) and 4% CaCO₃, were compared with the reference samples made under the same conditions and with the same raw materials.

| | | | | | | |
|---|---|---|---|---|---|---|
| concentration | % | 0 | 5 | 10 | 20 | 40 |
| grammage | g/m² | 174 | 172 | 173 | 171 | 164 |
| thickness | µm | 256 | 275 | 284 | 305 | 311 |
| bulk | dm³/kg | 1.47 | 1.60 | 1.64 | 1.78 | 1.90 |
| breaking length | Km | 3.7 | 3.2 | 2.8 | 2.4 | 1.7 |
| tensile strength | % | 1.7 | 1.5 | 1.5 | 1.6 | 1.6 |
| burst | kg/cm² | 3.1 | 2.4 | 2.3 | 1.9 | 1.5 |
| tear Elmendorf | kN | 156 | 120 | 112 | 88 | 68 |
| ash (525°C) | % | 4.0 | 4.4 | 4.7 | 5.1 | 6.0 |

After one month, the specimens still preserve the lavender perfume.

### EXAMPLE 9

Asparagus residuals (mainly stems) dried in the sun, are ground to dimensions of less than 500 µm by a hammer mill and used, after sifting through a 300 µm sieve, for hand-making sheets of paper (according to standards ATICELCA MC 218-79). The flour obtained had an ash-content (525°C) of 22% and an apparent specific weight (depending on the type and degree of grinding) equal to 0.55 kg/dm³.

The characteristics of the paper specimens obtained, approx. 170 g/m², bleached chemical pulp composition (70% short fibre, 30% long fibre) and 4% CaCO₃, were compared with the reference samples made under the same conditions and with the same raw materials.

| | | | | | | |
|---|---|---|---|---|---|---|
| concentration | % | 0 | 5 | 10 | 20 | 40 |
| grammage | g/m² | 174 | 173 | 172 | 172 | 167 |
| thickness | µm | 256 | 270 | 284 | 300 | 304 |
| bulk | dm³/kg | 1.47 | 1.56 | 1.65 | 1.74 | 1.82 |
| breaking length | Km | 3.7 | 3.1 | 2.7 | 2.2 | 1.5 |
| tensile strength | % | 1.7 | 1.5 | 1.4 | 1.4 | 1.6 |
| burst | kg/cm² | 3.1 | 2.1 | 1.9 | 1.6 | 1.2 |
| tear Elmendorf | kN | 156 | 128 | 120 | 92 | 76 |
| whiteness (photovolt) | % | 87 | 73 | 64 | 55 | 47 |
| ash (525°C) | % | 4.0 | 4.2 | 4.5 | 5.3 | 6.4 |

### EXAMPLE 10

250 g of wheat straw (harvested in July 1993) dried in the sun (approx. 80% dry) are cut and ground twice in a hammer mill with 500 µm sieve. The powder obtained, sifted through a 300 µm sieve, has an ash-content equal to 20% (at 525°C), an apparent specific weight of 0.53 kg/dm³ and a typical golden-yellow colour. This material is used to hand-make sheets of paper (according to standards ATICELCA MC 218-79).

The characteristics of the paper specimens obtained, approx. 170 g/m², bleached chemical cellulose composition (70% short fibre, 30% long fibre) and 4% CaCO₃, were compared with the reference samples made under the same conditions and with the same raw materials. The specimens showed the following characteristics:

| | | | | | | |
|---|---|---|---|---|---|---|
| concentration | % | 0 | 5 | 10 | 20 | 40 |
| grammage | g/m² | 174 | 173 | 172 | 172 | 167 |
| thickness | µm | 256 | 278 | 292 | 315 | 322 |
| bulk | dm³/kg | 1.47 | 1.61 | 1.70 | 1.83 | 1.93 |
| breaking length | Km | 3.7 | 3.1 | 2.7 | 2.3 | 1.6 |
| tensile stretch | % | 1.7 | 1.6 | 1.5 | 1.6 | 1.6 |
| burst | kg/cm² | 3.1 | 2.2 | 2.1 | 1.7 | 1.2 |
| tear Elmendorf | kN | 156 | 120 | 108 | 84 | 68 |
| ash (525°C) | % | 4.0 | 4.7 | 5.0 | 6.0 | 7.2 |

## Claims

1. Process for manufacturing paper from integral vegetable substances characterised by the fact that:
a) vegetable substances having a alpha-cellulose content of less than 15% in weight are dried at a temperature lower than 150°C reducing their water-content to a value of less than 20% in weight;
b) these dried substances are micronized to reduced particle sizes of between 0.1 to 500 µm;
c) these micronized substances, in powder or in water suspensions, possibly mixed with agglomerative substances, are added to the paper-making cellulose mix in quantities of from 1 to 50% in weight of the mix.

2. Process as per claim 1. characterised by the fact that these vegetable substances are micronized in water in order to obtain suspensions with a content from 1% to 70% of dry substance and these suspensions are pasteurized or irradiated to prevent fermentation.

3. Process as per claim 1. characterized by the fact these dried substances are micronized in order to reduce particle dimensions to between 1 to 100 µm.

4. Process as per claim 1. characterised by the fact that said agglomerative substances are selected from the group consisting of salts of aluminium, salts of iron, cationic starch, cationizing agents.

5. Paper containing from 1 to 50% in weight of integral vegetable substances having a alpha-cellulose content of less than 15% in weight.

6. Paper as per claim 5. characterised by the fact that said integral vegetable substances come from the treatment of biomasses of agricultural, farm and food origin.

7. Paper as per claim 6. characterised by the fact that said biomasses are made up of the processing residuals of citrus fruits, the tubers of starches, corn, wheat, rice, cereals, oil-seeds.

8. Paper as per claim 6. characterised by the fact that said biomasses are made up of integral straw, integral kenaf, millet, annual plants, lucerne.

9. Use of paper containing from 1 to 50% in weight of integral vegetable substances having a alpha-cellulose content of less than 15% for the production of livestock feed.
